# EUROPÄISCHE PATENTSCHRIFT

(11) **EP 1 363 044 B1**
(45) Veröffentlichungstag und Bekanntmachung des Hinweises auf die Patenterteilung: **17.08.2005**
(21) Anmeldenummer: 03010573.8
(22) Anmeldetag: 12.05.2003
(51) Int. Cl.: F16F 15/08, F02M 37/10

(54) **Pumpenanordnung**
Pump arrangement
Ensemble pompe

(30) Priorität: 17.05.2002 DE 10222158
(43) Veröffentlichungstag der Anmeldung: 19.11.2003
(73) Patentinhaber: Pierburg GmbH, 41460 Neuss (DE)
(72) Erfinder: Bumbel, Andreas, Dr., 44575 Castrop-Rauxel (DE); Bonse, Michael, 40625 Düsseldorf (DE); Peters, Rainer, 47574 Goch (DE); Van de Venne, Günter, 41238 Mönchengladbach (DE)
(74) Vertreter: von Kirschbaum, Alexander, Dipl.-Ing.

(56) Entgegenhaltungen:
- DE-A- 19 955 928
- US-A- 5 306 121
- US-A- 6 098 949

## Beschreibung

Die Erfindung betrifft eine Kraftfahrzeugpumpenanordnung zur Anordnung einer Kraftfahrzeugpumpe in einem Kraftfahrzeug.

Pumpen oder andere Aggregate, insbesondere hydraulische oder pneumatische Aggregate, werden in Kraftfahrzeugen mit Hilfe von Schwingungsdämpfern befestigt. Hierdurch werden von den Aggregaten erzeugte Schwingungen gedämpft. Ebenso ist die Übertragung von Schwingungen auf die Aggregate gedämpft. Eine derartige Dämpfung ist insbesondere bei Aggregaten mit schnell rotierenden Elementen, wie beispielsweise bei Sekundärluftpumpen, von großer Bedeutung. Das Vorsehen von Schwingungsdämpfern dient ferner zur Verringerung der Geräuschentwicklung.

Aus DE 199 55 928 ist eine Vorrichtung zur Aufhängung derartiger Aggregate bekannt. Zur Dämpfung des mit hoher Drehzahl laufenden Aggregats werden drei sternförmig angeordnete Schwingungsdämpfer vorgesehen. Die Schwingungsdämpfer sind in einer zur Rotationsachse des Aggregats senkrechten Ebene angeordnet. Durch derartige Schwingungsdämpfer werden in erster Linie bei der Rotation auftretende Tangentialkräfte gedämpft.

Dämpfungselemente, bei denen es sich üblicherweise um einen zwischen zwei Platten angeordneten elastomeren Körper handelt, weisen den generellen Nachteil auf, dass die Dämpfungseigenschaften in den drei Achsrichtungen unterschiedlich sind. Dies hat den Nachteil, dass auf Grund unterschiedlicher auftretender Belastungen Geräuschentwicklungen auftreten.

Aufgabe der Erfindung ist es, eine Kraftfahrzeugpumpenanordnung für Pumpen zu schaffen, mit der die Entkopplung zwischen Kraftfahrzeug und Pumpe verbessert ist.

Die Lösung der Aufgabe erfolgt erfindungsgemäß durch den Anspruch 1.

Die erfindungsgemäße Kraftfahrzeugpumpenanordnung zur Anordnung einer Kraftfahrzeugpumpe in einem Kraftfahrzeug weist ein Pumpengehäuse auf. Bei der Pumpe handelt es sich vorzugsweise um eine Sekundärluftpumpe. Erfindungsgemäß ist mit dem Pumpengehäuse ein Zwischenteil verbunden. Das Zwischenteil ist einerseits mit dem Pumpengehäuse über Dämpfungselemente verbunden und andererseits mit einer Halterung ebenfalls über Dämpfungselemente verbindbar. Hierdurch kann eine gute Entkopplung der Pumpe von dem Chassis oder einer mit dem Chassis fest verbundenen Halterung erzielt werden. Das Vorsehen des Zwischenteils bewirkt, dass diejenigen Kräfte, die von dem Dämpfungselement nicht gedämpft, sondern übertragen werden, nicht unmittelbar auf das Chassis oder auf die Pumpe übertragen werden. Vielmehr werden diese Kräfte auf dem Zwischenring übertragen, der ausschließlich von Dämpfungselementen gehalten ist und somit in vorgegebenen Grenzen schwingen kann. Durch diese Entkopplung der Pumpe bzw. des Pumpengehäuses gegenüber dem Chassis oder einem anderen Teil des Kraftfahrzeugs können hierbei unterschiedliche Richtungen gedämpft werden. Hierdurch ist die Geräuschentwicklung erheblich reduziert.

Als Dämpfungselemente sind vorzugsweise Dämpfungselemente vorgesehen, die im Wesentlichen in Längsrichtung auftretende Schwingungen oder quer zur Längsrichtung auftretende Schwingungen aufnehmen. Hierbei ist es möglich herkömmliche Schwingungselemente mit einem zwischen zwei Platten angeordneten elastischen Körper vorzusehen. Die Verbindung zwischen dem Pumpengehäuse und dem Zwischenring bzw. dem Zwischenring und der Halterung erfolgt hierbei in unterschiedliche Richtungen, so dass ein Teil der Schwingungselemente als Längs-Dämpfer und ein Teil der Schwingungselemente als Quer-Dämpfer fungiert.

Vorzugsweise sind auf der einen Seite des Zwischenteils nur Längs-Dämpfer und auf der anderen Seite des Zwischenteils nur Quer-Dämpfer vorgesehen. Beispielsweise ist das Pumpengehäuse mit dem Zwischenteil nur über Längs-Dämpfer und das Zwischenteil der Halterung nur über Quer-Dämpfer verbunden.

Das Zwischenteil umgibt das Pumpengehäuse vorzugsweise teilweise. Besonders bevorzugt ist es, ein ringförmiges Zwischenteil vorzusehen, das das Pumpengehäuse vollständig umgibt.

Vorzugsweise sind mindestens drei Längs-Dämpfer und/oder mindestens drei Quer-Dämpfer vorgesehen. Bei einem im Wesentlichen ringförmigen Zwischenteil sind die Längs-Dämpfer und/oder die Quer-Dämpfer vorzugsweise regelmäßig am Umfang des Zwischenteils angeordnet. Besonders bevorzugt ist es, Längs- und Querdämpfer abwechselnd anzuordnen.

Ferner wird ein Schwingungs-Entkopplungselement zur Befestigung von Pumpen in Kraftfahrzeugen vorgeschlagen, das nicht Gegenstand der Erfindung ist. Das Schwingungs-Entkopplungselement weist ein Zwischenteil zur Aufnahme der Pumpe und zur Befestigung im Kraftfahrzeug auf. Mit dem Zwischenteil sind Dämpfungselemente verbunden, die einerseits mit dem Pumpengehäuse und andererseits mit dem Kraftfahrzeug bzw. einer Halterung verbindbar sind. Hierbei sind Dämpfungselemente vorgesehen, die im Wesentlichen in Längsrichtung auftretende und im Wesentlichen quer zur Längsrichtung auftretende Schwingungen dämpfen. Das Schwingungs-Entkopplungselement ist vorzugsweise, wie vorstehend anhand der Pumpenanordnung beschrieben, vorteilhaft weitergebildet.

Nachfolgend wird die Erfindung anhand einer bevorzugten Ausführungsform unter Bezugnahme auf die anliegenden Zeichnungen näher erläutert.

Es zeigen:

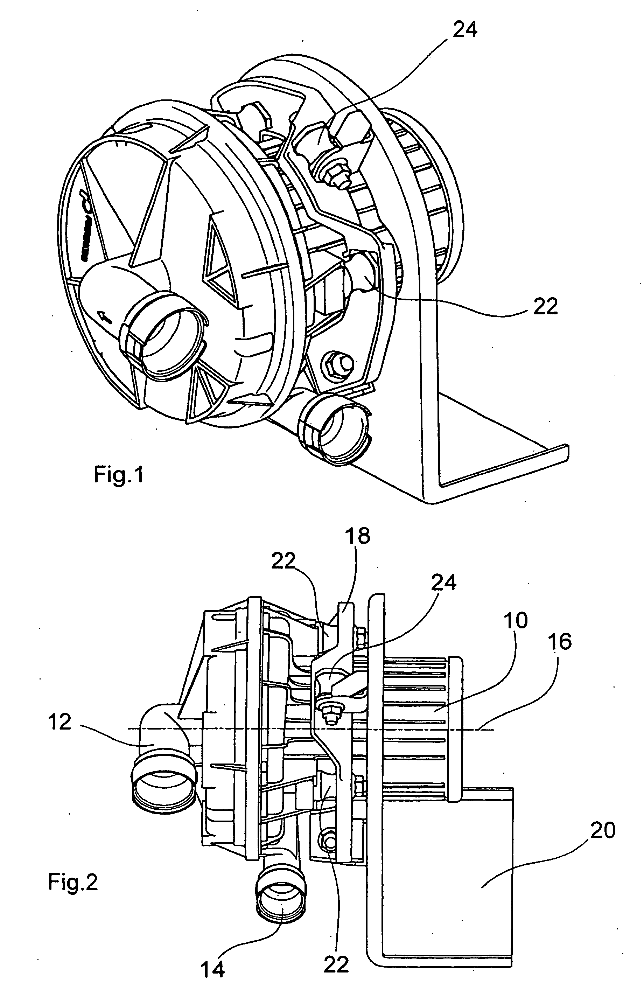

- Fig. 1: eine perspektivische schematische Ansicht der Pumpenanordnung,
- Fig. 2: eine weitere perspektivische schematische Ansicht der in Fig. 1 dargestellten Pumpenanordnung und
- Fig. 3: eine schematische Teilansicht eines Schwingungs-Entkopplungselements.

Ein Pumpengehäuse 10, bei dem es sich im dargestellten Ausführungsbeispiel um ein Pumpengehäuse für eine Sekundärluftpumpe handelt, weist zwei Anschlußstutzen 12,14 zum Verbinden mit Luftkanälen auf. Innerhalb des Gehäuses 10 ist eine um eine Längsachse 16 der Pumpe rotierende Pumpe angeordnet. Das Pumpengehäuse ist erfindungsgemäß über ein Zwischenteil 18 mit einer Halterung 20 verbunden. Die Halterung 20 ist beispielsweise mit dem Chassis des Kraftfahrzeugs verschraubt oder verschweißt.

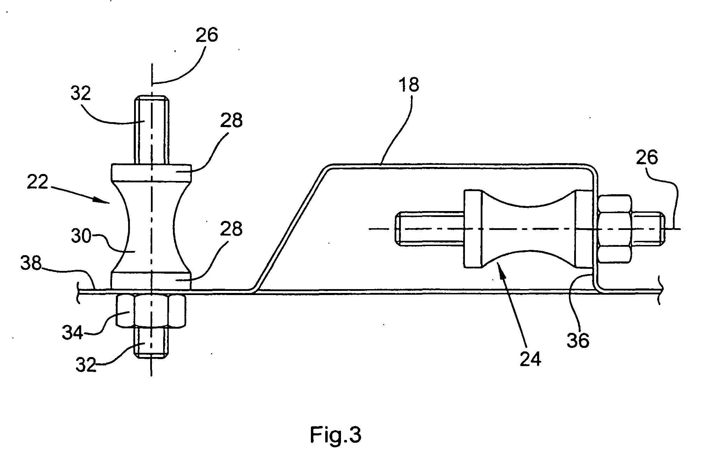

Zur Schwingungsdämpfung sind zwischen dem ringförmigen, das Pumpengehäuse umgebenden Zwischenteil 18 und dem Pumpengehäuse 10 bzw. der Halterung 20 jeweils drei Dämpfungselemente 22,24 angeordnet. Die Dämpfungselemente 22 dienen im Wesentlichen zur Aufnahme von quer zur Längsachse 16 der Pumpe auftretenden Kräften bzw. Schwingungen. Hierzu ist die Längsachse 26 (Fig. 3) der Dämpfungselemente 22 parallel zur Längsachse 16 der Pumpe angeordnet.

Des weiteren sind die drei Dämpfungselement 24 um 90° versetzt zu den Dämpfungselementen 22 angeordnet. Die Längsachse 26 der Dämpfungslemente 24 verläuft somit quer zur Längsachse 16 der Pumpe bzw. im Wesentlichen tangential bezogen auf ein kreisrundes Pumpengehäuse 10 bzw. ein im Wesentlichen ringförmiges Zwischenteil 18. Bei den Dämpfungselementen 22 handelt es sich somit um Quer-Dämpfer und bei den Dämpfungselementen 24 um Längs-Dämpfer. Bei der dargestellten bevorzugten Ausführungsform der Erfindung sind jeweils drei dieser Dämpfer regelmäßig am Umfang verteilt mit dem Zwischenteil 18 verbunden. Insbesondere sind Längs-Dämpfer 24 und Quer-Dämpfer 22 abwechselnd angeordnet.

Auf Grund der erfindungsgemäßen Entkopplung des Pumpengehäuses 10 bzgl. der Halterung 20 können Schwingungen unabhängig von der Richtung, in der sie auftreten, von den Dämpfungselementen 22,24 gedämpft werden.

Als Dämpfungselemente sind herkömmliche Dämpfer 22,24 vorgesehen. Die Dämpfungselemente 22,24 weisen zwei parallel zueinander angeordnete Platten 28 sowie ein fest mit den Platten verbundenes, zwischen den Platten 28 angeordnetes Dämpfungsteil 30 aus elastischem Material auf. Die besten Dämpfungseigenschaften weisen derartige Dämpfungselemente senkrecht zur Längsachse 26 auf. Ferner sind mit den Platten 28 Gewindestangen 32 fest verbunden, so dass mit Hilfe von Muttern 34 die Dämpfungselemente 22,24 auf einfache Weise mit dem Zwischenteil 18 bzw. dem Pumpengehäuse 10 und der Halterung 20 verbunden werden können.

Das erfindungsgemäße Zwischenteil ist vorzugsweise als Ring ausgebildet. Es kann sich hier auch um ein Zwischenteil handeln, das das Pumpengehäuse 10 nur teilweise umgibt. Vorzugsweise weist das Zwischenteil 18 in Umfangsrichtung weisende Befestigungsbereiche 36 (Fig. 3) und senkrecht zur Umfangsrichtung weisende Befestigungsbereiche 38 auf. Die Befestigungsbereiche 36, bei denen es sich vorzugsweise um ebene Flächen handelt, dienen zur Befestigung der Längs-Dämpfer 24. Die Befestigungsbereiche 38, bei denen es sich ebenfalls vorzugsweise um ebene Flächen handelt, dienen zur Befestigung der Quer-Dämpfer 22. Bezogen auf den Umfang des vorzugsweise geschlossenen ringförmigen Zwischenteils 18 sind die Befestigungsflächen 36,38 abwechselnd und vorzugsweise gleichmäßig am Umfang verteilt angeordnet.

## Patentansprüche

1. Kraftfahrzeugpumpenanordnung zur Anordnung einer Kraftfahrzeugpumpe in einem Kraftfahrzeug, mit
einem Pumpengehäuse (10),
einem mit dem Pumpengehäuse (10) verbundenen Zwischenteil (18),
zwischen dem Pumpengehäuse (10) und dem Zwischenteil (18) angeordneten Dämpfungselementen (22) und
mit dem Zwischenteil (18) verbundene Dämpfungselemente (24) zur Verbindung des Pumpengehäuses (10) mit einer Halterung (20).

2. Kraftfahrzeugpumpenanordnung nach Anspruch 1, **dadurch gekennzeichnet, dass** ein Teil der Dämpfungselemente (24) zur Dämpfung von im Wesentlichen in Längsrichtung (16) des Pumpengehäuses (10) auftretenden Schwingungen und ein Teil der Dämpfungselemente (24) zu im Wesentlichen quer zur Längsrichtung (16) auftretenden Schwingungen vorgesehen sind.

3. Kraftfahrzeugpumpenanordnung nach Anspruch 2, **dadurch gekennzeichnet, dass** nur Längs-Dämpfer (24) oder nur Quer-Dämpfer (22) zwischen dem Pumpengehäuse (10) und dem Zwischenteil (18) angeordnet sind.

4. Kraftfahrzeugpumpenanordnung nach einem der Ansprüche 1-3, **dadurch gekennzeichnet, dass** die Dämpfungselemente (22,24) ein zwischen zwei Platten (28) angeordnetes Dämpfungsteil (30) aus elastischem Material aufweisen.

5. Kraftfahrzeugpumpenanordnung nach einem der Ansprüche 1-4, **dadurch gekennzeichnet, dass** die Längsachse (26) der Dämpfungselemente (22) in Längsrichtung (16) des Pumpengehäuses (10) oder quer zur Längsrichtung (16) des Pumpengehäuses (10) verlaufen.

6. Kraftfahrzeugpumpenanordnung nach Anspruch 3 oder 4, **dadurch gekennzeichnet, dass** die Längsachse (26) der Quer-Dämpfer (22) in tangentialer Richtung verlaufen.

7. Kraftfahrzeugpumpenanordnung nach einem der Ansprüche 1-6, **dadurch gekennzeichnet, dass** das Zwischenteil (18) das Pumpengehäuse (10) zumindest teilweise umgibt.

8. Kraftfahrzeugpumpenanordnung nach einem der Ansprüche 1-7, **dadurch gekennzeichnet, dass** das Zwischenteil (18) ringförmig ist.

9. Kraftfahrzeugpumpenanordnung nach einem der Ansprüche 1-8, **dadurch gekennzeichnet, dass** mindestens drei Längs-Dämpfer (24) und/oder drei Quer-Dämpfer (22) vorgesehen sind.

10. Kraftfahrzeugpumpenanordnung nach einem der Ansprüche 1-9, **dadurch gekennzeichnet, dass** die Längs-Dämpfer (24) und/oder die Quer-Dämpfer (22) im Wesentlichen regelmäßig um das Pumpengehäuse (10) verteilt angeordnet sind.

## Claims

1. An automobile pump arrangement to be used for installation of an automobile pump in an automobile, comprising
a pump housing (10),
an intermediate member (18) connected to the pump housing (10),
damping elements (22) arranged between the pump housing (10) and the intermediate member (18), and
damping elements (24) connected to the intermediate member (18), for connection of the pump housing (10) to a mounting support (20).

2. The automobile pump arrangement according to claim 1, **characterized in that** a part of the damping elements (24) are provided for the damping of vibrations occurring substantially in the longitudinal direction (16) of the pump housing (10) and a part of the damping elements (24) are provided for the damping of vibrations occurring substantially transversely to the longitudinal direction (16).

3. The automobile pump arrangement according to claim 2, **characterized in that** only longitudinal damping elements (24) or only transverse damping elements (22) are arranged between the pump housing (10) and the intermediate member (18).

4. The automobile pump arrangement according to any one of claims 1-3, **characterized in that** the damping elements (22,24) comprise a damping member (30) of elastic material arranged between two plates (28).

5. The automobile pump arrangement according to any one of claims 1-4, **characterized in that** the longitudinal axes (26) of the damping elements (22) extend in the longitudinal direction (16) of the pump housing (10) or transversely to the longitudinal direction (16) of the pump housing (10).

6. The automobile pump arrangement according to claim 3 or 4, **characterized in that** the longitudinal axes (26) of the transverse damping elements (22) extend in a tangential direction.

7. The automobile pump arrangement according to any one of claims 1-6, **characterized in that** the intermediate member (18) surrounds the pump housing (10) at least partially.

8. The automobile pump arrangement according to any one of claims 1-7, **characterized in that** the intermediate member (18) is annular.

9. The automobile pump arrangement according to any one of claims 1-8, **characterized in that** at least three longitudinal damping elements (24) and/or three transverse damping elements (22) are provided.

10. The automobile pump arrangement according to any one of claims 1-9, **characterized in that** the longitudinal damping elements (24) and/or the transverse damping elements (22) are arranged around the pump housing (10) at substantially regular intervals.

## Revendications

1. Agencement de pompe pour véhicule automobile pour agencer une pompe pour véhicule automobile dans un véhicule automobile, comportant
un corps de pompe (10),
une pièce intermédiaire (18) reliée au corps de pompe (10),
des éléments amortisseurs (22) disposés entre le corps de pompe (10) et la pièce intermédiaire (18) et
des éléments amortisseurs (24) reliés à la pièce intermédiaire (18) pour relier le corps de pompe (10) à une fixation (20).

2. Agencement de pompe pour véhicule automobile selon la revendication 1, **caractérisé en ce qu'**une partie des éléments amortisseurs (24) est prévue pour amortir des vibrations se produisant essentiellement dans la direction longitudinale (16) du corps de pompe (10) et une partie des éléments amortisseurs (24) est prévue pour des vibrations se produisant essentiellement transversalement à la direction longitudinale (16).

3. Agencement de pompe pour véhicule automobile selon la revendication 2, **caractérisé en ce que** seuls des amortisseurs longitudinaux (24) ou seuls des amortisseurs transversaux (22) sont disposés entre le corps de pompe (10) et la pièce intermédiaire (18).

4. Agencement de pompe pour véhicule automobile selon l'une des revendications 1 à 3, **caractérisé en ce que** les éléments amortisseurs (22, 24) présentent une pièce d'amortissement (30) en matériau élastique disposée entre deux plaques (28).

5. Agencement de pompe pour véhicule automobile selon l'une des revendications 1 à 4, **caractérisé en ce que** l'axe longitudinal (26) des éléments amortisseurs (22) s'étend dans la direction longitudinale (16) du corps de pompe (10) ou transversalement à la direction longitudinale (16) du corps de pompe (10).

6. Agencement de pompe pour véhicule automobile selon la revendication 3 ou 4, **caractérisé en ce que** l'axe longitudinal (26) des amortisseurs transversaux (22) s'étend dans la direction tangentielle.

7. Agencement de pompe pour véhicule automobile selon l'une des revendications 1 à 6, **caractérisé en ce que** la pièce intermédiaire (18) entoure au moins partiellement le corps de pompe (10).

8. Agencement de pompe pour véhicule automobile selon l'une des revendications 1 à 7, **caractérisé en ce que** la pièce intermédiaire (18) est de forme annulaire.

9. Agencement de pompe pour véhicule automobile selon l'une des revendications 1 à 8, **caractérisé en ce qu'**au moins trois amortisseurs longitudinaux (24) et/ou trois amortisseurs transversaux (22) sont prévus.

10. Agencement de pompe pour véhicule automobile selon l'une des revendications 1 à 9, **caractérisé en ce que** les amortisseurs longitudinaux (24) et/ou les amortisseurs transversaux (22) sont disposés avec répartition sensiblement régulière autour du corps de pompe (10).
